# DEMANDE DE BREVET EUROPEEN

(11) **EP 4 751 949 A1**
(43) Date de publication de la demande: **03.06.2026**
(21) Numéro de dépôt: 25208728.3
(22) Date de dépôt: 15.10.2025
(51) Int. Cl.: B60J 1/02, F41H 5/26

(54) **STRUCTURE DE RÉCEPTION ET DE SOLIDARISATION DE VITRAGES, NOTAMMENT POUR PARE-BRISES DE VÉHICULES AUTOMOBILES**

(30) Priorité: 29.11.2024 FR 2413195
(71) Demandeur: CNIM Systèmes Industriels, 83500 La Seyne-sur-Mer (FR)
(72) Inventeur: PARIENTE, Jonathan, 83000 TOULON (FR); DAADOUN, Pascal, 83210 SOLLIES-PONT (FR)
(74) Mandataire: Ipsilon

(57) **Abrégé**

Cette structure de réception et de solidarisation de vitrages, notamment pour pare-brises de véhicules automobiles, et plus particulièrement de poids lourds, est solidarisée à la caisse de la cabine dudit véhicule.

Elle est constituée d'un châssis périphérique solidarisé à la caisse du véhicule.

Le châssis définit une pluralité de plans sécants deux à deux, chacun desdits plans recevant un vitrage mono ou multi épaisseur (5, 6), les vitrages (5, 6) étant maintenus au niveau des zones de divergence ou d'intersection des plans sécants au moyen d'une part, d'une plaque (8), également fixée aux montants ou bords respectivement supérieur et inférieur du châssis ou cadre, et d'autre part, par des appuis latéraux définis par le châssis ou cadre.

## Description

### DOMAINE DE L'INVENTION

L'invention appartient au domaine de l'automobile, et plus particulièrement des pare-brises renforcés pour véhicules dits « blindés », c'est-à-dire à l'épreuve des balles. Cependant, la présente invention trouve également application dans le domaine plus générale de la protection dite transparente, telle que par exemple pour les vitrages des tourelles d'observation et de surveillance.

Elle s'inscrit plus particulièrement dans le domaine des pare-brises à destination des poids lourds.

### ETAT ANTERIEUR DE LA TECHNIQUE

Dans le cadre des véhicules civils, et plus particulièrement des poids lourds, l'épaisseur du vitrage constitutif du pare-brise est relativement limitée, de sorte qu'il est envisageable de conférer au pare-brise en question une courbure au niveau des angles de la cabine, courbure apte à favoriser la vision du conducteur, et donc corollairement réduire les risques d'accidents.

S'agissant des véhicules à vocation militaire, il est recherché notamment le blindage du pare-brise, outre, bien évidemment, du reste de la caisse. Ce blindage du pare-brise est traditionnellement obtenu par la mise en œuvre d'une épaisseur importante du vitrage, obtenue par la superposition d'un certain nombre de couches de verre ou équivalent.

Avec de telles épaisseurs, typiquement comprises entre 40 et 120 millimètres, il n'est plus envisageable de conférer une quelconque courbure au pare-brise. Ce faisant, et dans une telle configuration, le blindage du pare-brise est obtenu par la mise en œuvre de montants ou piliers verticaux, ou sensiblement verticaux, s'étendant au niveau des angles dudit pare-brise, fixés par exemple par assemblage mécanique sur la caisse ou habitacle du véhicule, et permettant ainsi d'obtenir un pare-brise muni de différents plans sécants, aptes à définir la face principale dudit pare-brise et de faces latérales, contiguës à ladite face principale.

Si ces montants structurels permettent la fixation de telles épaisseurs de vitrage orientées selon des plans sécants, leur inconvénient réside dans une réduction importante de la visibilité du chauffeur ou conducteur.

L'objectif recherché par la présente invention est de s'affranchir de cet inconvénient.

Elle vise également à simplifier la réalisation de tels pare-brises.

### EXPOSE DE L'INVENTION

L'invention vise une structure de réception et de solidarisation de vitrages, notamment pour pare-brises de véhicules automobiles, et plus particulièrement de poids lourds, ladite structure étant solidarisée à la caisse de la cabine dudit véhicule, ou au bâti d'une enceinte statique.

Selon l'invention, cette structure est constituée d'une part d'un châssis périphérique solidarisé à la caisse du véhicule ou au bâti de l'enceinte statique, par exemple par soudage, ledit châssis définissant une pluralité de plans sécants deux à deux, chacun desdits plans recevant un vitrage mono ou multi épaisseur, les vitrages étant maintenus au niveau des zones de divergence ou d'intersection des plans sécants au moyen d'une part, d'une plaque, également fixée aux montants ou bords respectivement supérieur et inférieur du châssis, et d'autre part, par des appuis latéraux ou zones d'appui latéral définis par le châssis.

Dit autrement, l'invention propose de mettre en œuvre un cadre ou châssis plié au niveau de sa périphérie, et plus précisément au niveau de ses deux bords principaux en vis-à-vis, respectivement supérieur et inférieur, ces pliures étant localisées au niveau des zones de convergence des vitrages, ledit cadre ou châssis étant rapporté et notamment fixé sur la caisse proprement dite ou sur le bâti proprement dit.

Les vitrages sont positionnés au sein de ce cadre et maintenus au niveau des zones de divergence au moyen d'une part, d'une plaque, également fixée aux montants ou bords respectivement supérieur et inférieur du cadre, et d'autre part, par des appuis latéraux définis par le châssis ou cadre.

Ce faisant, on supprime la mise en œuvre de montants ou piliers typiquement verticaux, et il devient envisageable de mettre en œuvre des vitrages, quelle que soit leur épaisseur, uniquement plans, favorisant et simplifiant leur réalisation et leur mise en place au sein du cadre.

### BREVE DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 est une représentation schématique illustrant la mise en œuvre de pare-brises blindés conformes à l'art antérieur.
La figure 2 est une représentation schématique vue de face de la structure conforme à l'invention.
La figure 3 est une représentation schématique en section selon la ligne II - II de la figure 2.
La figure 4 est une représentation schématique en section selon la ligne IV - IV de la figure 2.
La figure 5 est une représentation schématique en section selon la ligne V - V de la figure 2.

### DESCRIPTION DETAILLEE DE L'INVENTION

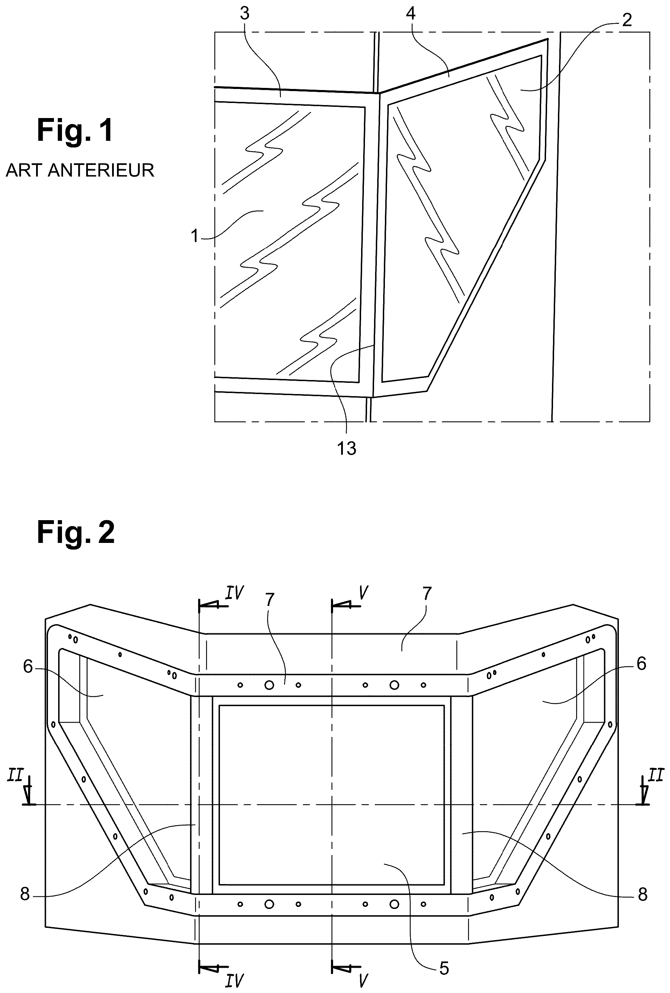

On a donc représenté sur la figure 1 une vue schématique d'un pare-brise de poids lourds blindé conforme à l'art antérieur. Comme on peut l'observer, ce pare-brise comporte une face principale (1) et une face latérale (2), toutes deux constituées de l'empilement de vitrages, afin de conférer audit pare-brise sa fonction de blindage. Les différents feuillets constitutifs de ces faces latérales (1) et (2) sont solidarisés à un châssis (3, 4), notamment métallique, lui-même solidarisé à la caisse du véhicule par vissage ou soudage.

Afin de permettre le changement d'orientation entre les faces (1) et (2), un montant vertical (13) positionné aux deux angles des extrémités latérales de la face principale (1), est mis en œuvre, permettant de solidariser de manière efficace les différents feuillets constitutifs des blindages entre eux d'une part, et la zone d'intersection des faces (1) et (2) au châssis.

On conçoit la gêne occasionnée par ce montant ou profilé vertical pour le conducteur, en raison de son encombrement et de sa largeur.

L'invention est illustrée en relation avec les figures 2 à 5, plus spécifiquement en lien avec un pare-brise pour poids lourd. Celle-ci met toujours en œuvre un pare-brise constitué d'une face principale (5) et de deux faces latérales (6), chacune de ces faces étant constituée de l'empilement de différents feuillets ou vitres, afin de conférer à l'ensemble du pare-brise le blindage recherché.

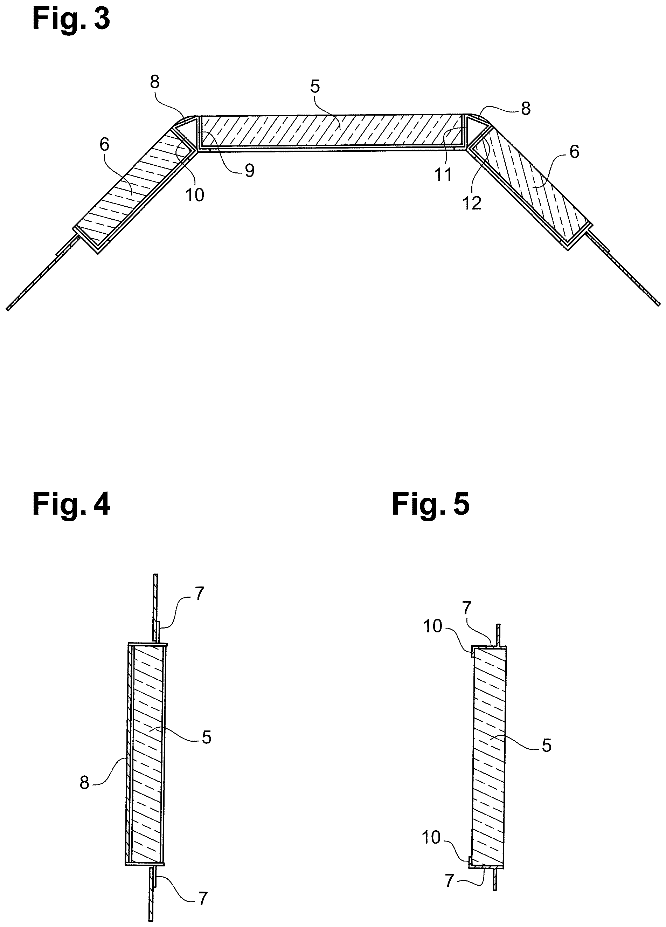

Contrairement à l'art antérieur, l'invention met en œuvre un châssis métallique (7) plié au niveau des zones d'intersection entre la face principale (5) et les faces latérales (6), tel qu'on peut par exemple l'observer sur la figure 3. Ce châssis (7), en l'espèce métallique (acier à blindage) peut être obtenu par le biais d'une structure mécanosoudée, ou par fonderie, voire par une filière configurée à cet effet.

Alternativement, ce châssis (7) peut être réalisé par soudage, voire collage deux à deux des éléments qui le constituent au niveau de la sécante ou de l'intersection des plans des faces latérales (6) et de la face principale (5).

Il peut également être envisagé la réalisation de ce châssis en matériau composite, par exemple à base d'un renfort réalisé à partir de fibres de verre ou de fibres de carbone et de matrice organique, susceptible d'offrir les mêmes caractéristiques mécaniques que celles d'une structure mécanique.

Les différents vitrages constitutifs des faces principale et latérales (6) et (5) sont maintenus par collage sur ce châssis plié (7), au niveau des portions linéaires par des excroissances recourbées (10) émanant dudit châssis (7) (voir figure 5).

Par ailleurs, au niveau des zones d'intersection, lesdits vitrages sont tout d'abord maintenus par des zones d'appui latéral (9, 10, 11, 12) définies par le châssis (7) d'une part (voir figure 3), ces zones d'appui latéral pouvant résulter de pliure, lesdites zones s'étendant sur toute la hauteur du châssis entre le bord supérieur et le bord inférieur, et d'autre part, au moyen d'une plaque métallique (8) (par exemple réalisée en acier), en l'espèce verticale, fixée sur le châssis (7) par soudage, respectivement au niveau du bord supérieur et du bord inférieur dudit châssis (7).

Les zones d'appui latéral (9, 10, 11, 12), en raison de leur positionnement et de leur solidarisation au cadre, sont également susceptibles de contribuer à conférer au cadre ou châssis (7) de la rigidifié mécanique supplémentaire.

Ce faisant, en raison de cette structure beaucoup plus allégée que les piliers de l'art antérieur, la visibilité du conducteur est beaucoup moins affectée. En outre, il devient possible de mettre en œuvre des vitrages parfaitement plans pour la constitution des faces respectivement principale (5) et latérales (6), facilitant le processus de réalisation de tels pare-brises blindés.

Afin d'optimiser la fixation des vitrages (5, 6) sur le cadre ou châssis (7), il peut également être envisagé de coller les tranches ou bords latéraux desdits vitrages en contact avec les zones d'appui latéral (9, 10,11, 12.

Dans une variante de l'invention (non représentée), on peut concevoir l'optimisation de la fixation des vitrages sur le châssis, au moyen de pièces métalliques rapportées, communément dénommées rappliques dans le domaine considéré, fixées par soudage, boulonnage ou autre sur les bords supérieur et inférieur du châssis (7)/

Par ailleurs, dans l'hypothèse où le châssis est réalisé en matériau composite, la plaque (8) est elle-même réalisée en matériau composite, et fixée sur le châssis par collage.

On conçoit dès lors tout l'intérêt de la présente invention qui permet de manière simple, d'optimiser tant la réalisation de tels pare-brises blindés, que les conditions de conduite d'un véhicule muni d'un tel pare-brise blindé.

Cet intérêt est également présent dans le cadre de la réalisation des surfaces transparentes pour les tourelles d'observation et de surveillance.

## Revendications

1. Structure de réception et de solidarisation de vitrages, notamment pour pare-brises de véhicules automobiles, et plus particulièrement de poids lourds, ladite structure étant solidarisée à la caisse de la cabine dudit véhicule, ladite structure étant constituée d'un châssis périphérique (7) solidarisé à la caisse du véhicule, ledit châssis définissant une pluralité de plans sécants deux à deux, chacun desdits plans recevant un vitrage mono ou multi épaisseur (5, 6), ***caractérisée en ce que*** les vitrages (5, 6) sont maintenus au niveau des zones de divergence ou d'intersection des plans sécants au moyen d'une part, d'une plaque (8), également fixée aux montants ou bords respectivement supérieur et inférieur du châssis périphérique (7), et d'autre part, par des appuis latéraux définis par le châssis (7).

2. Structure de réception et de solidarisation de vitrages pour pare-brises de véhicules automobiles selon la revendication 1*, **caractérisée en ce que*** le châssis périphérique (7) est plié au niveau des intersections des plans sécants.

3. Structure de réception et de solidarisation de vitrages pour pare-brises de véhicules automobiles selon la revendication 1*, **caractérisée en ce que*** le châssis périphérique (7) est réalisé par soudage, voire par collage deux à deux des éléments qui le constituent au niveau des intersections des plans sécants recevant les vitrages (5, 6).

4. Structure de réception et de solidarisation de vitrages pour pare-brises de véhicules automobiles selon l'une des revendications 1 à 3, ***caractérisée en ce que*** le châssis périphérique (7) et les plaques (8) sont métalliques.

5. Structure de réception et de solidarisation de vitrages pour pare-brises de véhicules automobiles selon l'une des revendications 1 à 4, ***caractérisée en ce que*** les plaques (8) sont soudées sur les bords supérieur et inférieur du châssis (7).

6. Structure de réception et de solidarisation de vitrages pour pare-brises de véhicules automobiles selon l'une des revendications 1 à *3, **caractérisée en ce que*** le châssis périphérique (7) et les plaques (8) sont réalisés en matériau composite.
